# NEUE EUROPÄISCHE PATENTSCHRIFT

(11) **EP 0 678 688 B2**
(45) Veröffentlichungstag und Bekanntmachung des Hinweises auf die Entscheidung über den Einspruch: **19.04.2000**
(45) Hinweis auf die Patenterteilung: 15.01.1997
(21) Anmeldenummer: 94119646.1
(22) Anmeldetag: 13.12.1994
(51) Int. Cl.: F16H 1/28, F16H 1/46

(54) **Spielarmes Wolfrom-Planetenzahnradgetriebe**
Low-backlash Wolfrom-planetary gearing
Train épicycloidal de type Wolfrom à faible jeu

(30) Priorität: 21.04.1994 DE 4413872
(43) Veröffentlichungstag der Anmeldung: 25.10.1995
(73) Patentinhaber: Alpha Getriebebau GmbH, D-97999 Igersheim (DE)
(72) Erfinder: Butsch, Michael, D-78467 Konstanz (DE); Eisele, Franz, D-97990 Weikersheim (DE); Fries, Uwe, D-97285 Tauberrettersheim (DE)
(74) Vertreter: Pfusch, Volker, Dipl.-Ing.

(56) Entgegenhaltungen:
- EP-A- 0 274 089
- EP-A- 0 303 148
- EP-A- 0 319 393
- DE-U- 9 015 184
- FR-A- 1 179 118
- FR-A- 2 381 205
- FR-A- 2 438 205
- FR-A- 2 613 449
- Ehrlenspiel, K., "Die konstruktive Lösung des Lastausgleichs", Konstruktion 31 (1979), Heft 1. S. 12 - 18

## Beschreibung

Die Erfindung betrifft ein spielarmes Wolfrom-Planetenzahnradgetriebe nach dem Oberbegriff des Patentanspruchs 1, das insbesondere aus FR-A-1 179 188 und auch aus FR-A-2438405 bekannt ist.

Insbesondere bei spielarmen Getrieben dieser Art besteht das Problem, die verschiedenen ineinandergreifenden Verzahnungsbereiche der einzelnen miteinander zu kombinierenden Teile für den gewünschten spielfreien Lauf ohne die gleichzeitige Gefahr eines Verklemmens einzelner Teile ausreichend genau fertigen und montieren zu können.

Eine grundsätzliche Lösung hierfür zeigt die Getriebeausführung nach den kennzeichnenden Merkmalen des Patentanspruchs 1 auf.

Diese Lösung beruht auf dem Gedanken, die zumindest bei einer wirtschaftlichen Fertigung teilweise unvermeidbaren Getriebetoleranzen möglichst weitgehend ausgleichen zu können.

Dies kann nach Anspruch 2 durch eine geschickte Aufteilung des Getriebegehäuses in bei der Montage radial einzeln gegeneinander verschiebbare Teile erfolgen, um dadurch das Laufspiel in den ineinander kämmenden Verzahnungsbereichen bei der Montage auf praktisch Null einzustellen.

Bei den Ausführungen nach den Ansprüchen 3 bis 5 ist nur zwischen den beiden Hohlrädern eine gegenseitige radiale Verschiebbarkeit durch eine echte Getriebegehäuseteilung bei der Montage möglich, während die radiale Verschiebbarkeit des Umlaufträgers durch ein radial verschiebbar fixiertes Lager gegeben ist. Die axiale Lagerfixierung erzeugt eine Federscheibe, die bei der Getriebemontage für eine ausreichende Lagefixierung des betreffenden Wälzlagers gespannt wird. Obwohl dieses Wälzlager nach der Getriebemontage lagefixiert ist, läßt es während des Getriebebetriebes noch geringe Mikro-Radialbewegungen zu.

Ausführungsbeispiele der Erfindung sind in der Zeichnung dargestellt.

Es zeigen
- Fig. 1: ein Wolfrom-Planetengetriebe mit drei radial gegeneinander verschiebbaren Gehäuseteilen teils im Längsschnitt und teils ungeschnitten,
- Fig. 2: ein Wolfrom-Planetengetriebe mit teils radial gegeneinander verschiebbaren Gehäuseteilen und einem über ein Wälzlager radial verschiebbaren Umlaufträger.

Das Gehäuse des Getriebes setzt sich in axialer Richtung zusammen aus insgesamt drei Teilbereichen 1, 2 und 3, von denen die aneinandergrenzenden Bereiche jeweils durch axial in diese eingreifende Schrauben 11, 12 fest miteinander verbindbar sind. Während die axiale Zuordnung der einzelnen Bereiche 1, 2 und 3 in fertigmontiertem Zustand, d.h. Betriebszustand, durch die Fertigungsmaße dieser Bereiche definiert vorgegeben ist, ist bei der Montage eine geringfügige radiale gegenseitige Verschiebung dieser Bereiche möglich. Hierauf wird im folgenden noch näher eingegangen werden.

In dem Gehäusebereich 2 befindet sich das feststehende der beiden Hohlräder, nämlich das Fest-Hohlrad 4. In diesem kämmt einer der beiden axialen Teilbereiche der Planetenräder 5, die in einem Umlaufträger 6 gelagert sind. Zentral kämmt ein Sonnenrad 7 in den Planetenrädern 5.

Drehbar gelagert ist der Umlaufträger 6 in dem Gehäusebereich 3. Mit ihrem jeweils axial zweiten Teilbereich kämmen die Planetenräder 5 in dem drehbaren der beiden Hohlräder, nämlich dem Hohlrad 8. Dieses ist in dem Teilbereich 1 des Gehäuses gelagert.

Eine unterschiedliche Drehzahl zwischen dem Sonnenrad 7 und dem Los-Hohlrad 8 resultiert aus dem Wolfrom-Prinzip, nach dem die Hohlräder 4, 8 unterschiedliche Zähnezahlen besitzen.

Der für eine spielfreie Verzahnung der einzelnen ineinander kämmenden Zahnräder erforderliche Ausgleich vorhandener Fertigungstoleranzen wird bei der Getriebemontage bei den beiden dargestellten Ausführungsformen wie folgt erzielt.

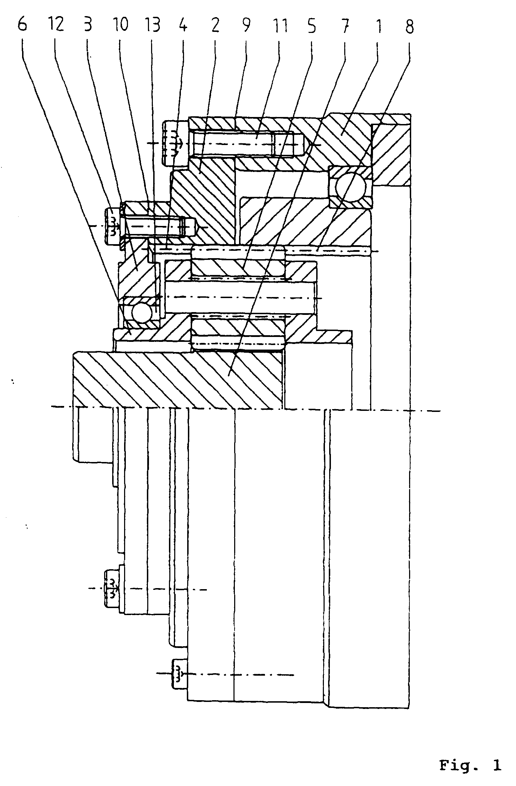

Bei der Ausführung nach Fig. 1 wird das Getriebe bis auf ein gegenseitiges festes axiales Verschrauben der drei Gehäuse-Teilbereiche 1, 2 und 3 vormontiert.

In diesem Zustand sind diese drei Gehäuse-Teilbereiche in ihren Führungsebenen in den Trennfugen 9 und 10 radial gegeneinander geringfügig verschiebbar.

In einem ersten Schritt werden unter Drehung des Umlaufträgers 6 die Gehäuse-Teilbereiche 1 und 2 radial gegeneinander ausgerichtet, d.h. der Umlaufbahn der axialen Teilbereiche der Planetenräder 5 angepaßt. Nach dieser Anpassung, die bei axialer Teilverspannung der Teilbereiche 1 und 2 über Schrauben 11 erfolgt, werden diese Teilbereiche 1 und 2 über jene Schrauben 11 dauerhaft gegeneinander fixiert.

In einem darauffolgenden zweiten Montageschritt wird der Gehäuse-Teilbereich 3 dauerfest gegenüber dem Teilbereich 2 durch Nachziehen der dort zunächst lediglich vorgespannten Schrauben 12 fixiert.

Ein derart montiertes Wolfrom-Planetenzahnradgetriebe gewährleistet bei einem insgesamt in bezug auf Fertigungsgenauigkeit kostenmäßig noch vertretbaren Fertigungsaufwand einen äußerst spielarmen, praktisch spielfreien Getriebelauf.

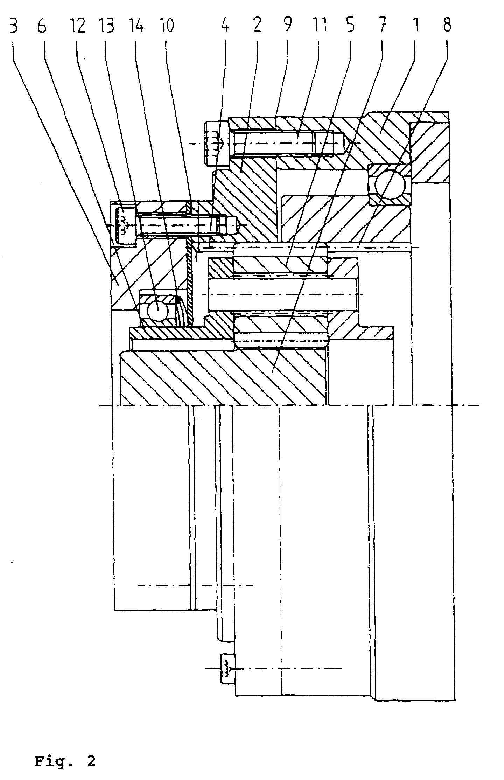

Bei der Ausführung nach Fig. 2 läuft der erste Montageschritt in gleicher Weise ab.

Einen etwas unterschiedlichen Aufbau weisen lediglich die für den zweiten Montageschritt maßgeblichen Funktionsteile des Getriebegehäuses auf. Das dritte Getriebegehäuseteil 3 muß nämlich als solches nicht radial verschiebbar gegenüber dem zweiten Gehäuseteil 2 montierbar sein. Diese radiale Verschiebbarkeit der Lagerung des Umlaufträgers 6 bewirkt hier ein gegenüber dem dritten Gehäuseteil 3 radial verschiebbares Umlaufträger-Wälzlager 13. Seine axiale Fixieerhält dieses Lager 13 durch die Spannkraft einer Federscheibe 14. Das Wälzlager 13 liegt an einem axialen Ende fest in dem dritten Gehäuseteil 3 an. An der anderen Lagerseite greift die Federscheibe 14 an, die durch ein axiales Anziehen des dritten gegenüber dem zweiten Gehäuseteil 3 bzw. 2 gespannt wird. Damit dieses Spannen möglich ist, befindet sich in der Trennfuge 10 zwischen den beiden Gehäuseteilen 2 und 3 eine Scheibe, die zwischen diesen beiden Teilen 2 und 3 fest einklemmbar ist und als Abstützung für die Federscheibe 14 dient. Gleichzeitig mit dem Einklemmen der vorgenannten in der Trennfuge 10 befindlichen Scheibe wird auch die Federscheibe 14 auf ihre vorbestimmte Haltekraft gespannt. So können Fertigungsungenauigkeiten bereits bei der Montage, bei der der Umlaufträger 6 während des Anziehens des dritten Gehäuseteils 3 an das zweite Gehäuseteil 2 gedreht wird, ausgeglichen werden. Darüber hinaus erlaubt die Federscheibe 14 auch während des Getriebebetriebes noch Fertigungsungenauigkeiten ausgleichende radiale Mikrobewegungen.

## Patentansprüche

1. Spielarmes Wolfrom-Planetenzahnradgetriebe, bei dem
- ein Umlaufträger (6), der insbesondere an- oder abgetrieben ist, innerhalb eines Getriebegehäuses gelagert ist,
- auf dem Umlaufträger (6) Planetenräder (5) geführt sind, von denen ein erster axialer Bereich gleichzeitig in einem Sonnenrad (7) und einem ersten Hohlrad (4) mit einer ersten Zähnezahl kämmt und von denen ein zweiter axialer Bereich ausschließlich in einem zweiten Hohlrad (8) mit einer von der ersten Zähnezahl geringfügig abweichenden zweiten Zähnezahl kämmt,
- das erste Hohlrad (4) in einem Gehäuseteil (2) des Getriebegehäuses festgelegt ist,
- das zweite Hohlrad über ein Lager drehbar in einem Gehäuseteil (1) des Getriebegehäuses gelagert ist,
- der Umlaufträger (6) in einem Gehäuseteil (3) des Getriebegehäuses drehbar gelagert ist,
- alle Gehäuseteile im Betrieb gegeneinander dauerhaft fixiert sind,
**gekennzeichnet durch die Merkmale**
- die Gehäuseteile (1 bis 3) für den Umlaufträger (6) und die Hohlräder (4, 8) sind derart ausgebildet, daß sie bei der Montage des Getriebes radial zueinander verschiebbar sind, um für die kämmenden Verzahnungen einen spielarmen, praktisch spielfreien Getriebelauf einzustellen,
- eine mit dem Sonnenrad (7) versehene An- oder Abtriebswelle ist ohne eine zusätzliche Lagerung lediglich durch das in den Planetenrädern (5) kämmende Sonnenrad (7) zentriert.

2. Spielarmes Wolfrom-Getriebe nach Anspruch 1,
**dadurch gekennzeichnet**,
daß die einzelnen Gehäuseteile (1 - 3) zueinander entsprechend geteilt und erst bei montiertem Getriebe radial ausgerichtet miteinander verschraubt sind.

3. Spielarmes Wolfrom-Getriebe nach Anspruch 1,
**dadurch gekennzeichnet**,
daß lediglich das erste und zweite Hohlrad (4, 8) durch eine entsprechende Gehäuseteilung bei der Montage radial gegeneinander verschiebbar sind, während der Umlaufträger (6) in einem zumindest bei der Montage radial verschiebbaren Wälzlager (13) gelagert ist.

4. Spielarmes Wolfrom-Getriebe nach Anspruch 3,
**dadurch gekennzeichnet**,
daß das radial verschiebbare Wälzlager (13) axial durch eine Federscheibe (14) lagefixiert ist.

5. Spielarmes Wolfrom-Getriebe nach Anspruch 4,
**dadurch gekennzeichnet**,
daß die Federscheibe bei der Montage des Getriebes unter Drehung des Umlaufträgers (6) auf ihren lagerfixierenden Haltewert gespannt wird.

## Claims

1. Low-backlash Wolfrom planetary gearing in which
- a planet carrier (6), which is, in particular, an input or output planet carrier, is mounted within a gear housing,
- planet wheels (5) are guided on the planet carrier (6), of which planet wheels a first axial region simultaneously meshes in a sun wheel (7) and a first hollow wheel (4) with a first number of teeth and of which a second axial region meshes exclusively in a second hollow wheel (8) with a second number of teeth differing slightly from the first number of teeth,
- the first hollow wheel (4) is secured in a housing part (2) of the gear housing,
- the second hollow wheel is mounted rotatably in a housing part (1) of the gear housing via a bearing,
- the planet carrier (6) is rotatably mounted in a housing part (3) of the gear housing,
- all housing parts are fixed permanently relative to one another during operation,
characterized by the following features:
- the housing parts (1 to 3) for the planet carrier (6) and the hollow wheels (4, 8) are designed in such a way that they are displaceable radially relative to one another during assembly of the gearing in order to set low-backlash, virtually backlash-free running of the gear for the meshing teeth,
- an input or output shaft provided with the sun wheel (7) is centred solely by means of the sun wheel (7) meshing in the planet wheels (5), without additional bearing support.

2. Low-backlash Wolfrom gearing according to claim 1, characterised in that the individual housing parts (1 to 3) are correspondingly divided from one another and are screwed to one another with radial orientation only when the gearing is assembled.

3. Low-backlash Wolfrom gearing according to claim 1, characterised in that only the first and second hollow wheel (4, 8) are radially displaceable relative to one another by corresponding division of the housing during assembly whereas the planet carrier (6) is mounted in a rolling bearing (13) which is radially displaceable at least during assembly.

4. Low-backlash Wolfrom gearing according to claim 3, characterised in that the radially displaceable rolling bearing (13) is axially fixed in position by a spring washer (14).

5. Low-backlash Wolfrom gearing according to claim 4, characterised in that the spring washer (14) is tensioned to its bearing-fixing holding value during assembly of the gearing by rotation of the planet carrier (6).

## Revendications

1. Train épicycloïdal de type Wolfrom à faible jeu, dans lequel
- un support planétaire (6), en particulier entraîné ou mené, est logé à l'intérieur d'un carter d'engrenage,
- sur le support planétaire (6) sont guidées des roues planétaires (5), dont une première zone axiale s'engrène en même temps dans une roue solaire (7) et une première roue creuse (4) avec un premier nombre de dents, et dont une deuxième zone axiale s'engrène exclusivement dans une deuxième roue creuse (8) avec un deuxième nombre de dents légèrement différent du premier nombre de dents,
- la première roue creuse (4) est fixée dans une partie de carter (2) du carter d'engrenage,
- la deuxième roue creuse est logée de façon à pouvoir tourner au moyen d'un palier dans une partie de carter (1) du carter d'engrenage,
- le support planétaire (6) est logé de façon à pouvoir tourner dans une partie de carter (3) du carter d'engrenage,
- toutes les parties de carter sont fixées en Service de façon durable les unes contre les autres,
**caractérisé par les caractéristiques suivantes :**
- les parties de carter (1 à 3) pour le support planétaire (6) et les roues creuses (4, 8) sont conçues de telle manière qu'elles puissent se déplacer dans le sens radial les unes par rapport aux autres lors du montage de l'engrenage, afin d'établir pour les dentures s'engrenant une course d'engrenage avec un faible jeu, pratiquement sans jeu,
- un arbre d'entraînement ou mené muni de la roue solaire (7) est centré, sans logement de palier supplémentaire, simplement par la roue solaire (7) s'engrenant dans les roues planétaires (5).

2. Engrenage de type Wolfrom à faible jeu selon la revendication 1, caractérisé en ce que les différentes parties de carter (1 - 3) sont divisées de manière appropriée les unes par rapport aux autres et sont vissées entre elles avec une orientation radiale, seulement après le montage de l'engrenage.

3. Engrenage de type Wolfrom à faible jeu selon la revendication 1, caractérisé en ce que seules les première et deuxième roues creuses (4, 8) peuvent être déplacées dans le sens radial l'une par rapport à l'autre lors du montage, par une division appropriée du carter, tandis que le support périphérique (6) est logé dans un palier à roulement (13) mobile radialement au moins lors du montage.

4. Engrenage de type Wolfrom à faible jeu selon la revendication 3, caractérisé en ce que le palier à roulement (13) mobile radialement est fixé dans sa position au moyen d'une rondelle élastique (14).

5. Engrenage de type Wolfrom à faible jeu selon la revendication 4, caractérisé en ce que la rondelle élastique (14) est tendue lors du montage de l'engrenage en tournant le support périphérique (6) jusqu'à sa valeur de maintien, qui fixe le palier.
